(19) Europäisches Patentamt
European Patent Office
Office européen des brevets

(11) EP 4 087 331 A1

(12) EUROPEAN PATENT APPLICATION
published in accordance with Art. 153(4) EPC

(43) Date of publication:
09.11.2022 Bulletin 2022/45

(51) International Patent Classification (IPC):
H04W 52/08 (2009.01)    H04W 52/36 (2009.01)

(21) Application number: 20911582.3

(22) Date of filing: 07.01.2020

(52) Cooperative Patent Classification (CPC):
H04W 52/08; H04W 52/36

(86) International application number:
PCT/CN2020/070736

(87) International publication number:
WO 2021/138811 (15.07.2021 Gazette 2021/28)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: GUANGDONG OPPO MOBILE
TELECOMMUNICATIONS
CORP., LTD.
Wusha, Chang'an
Dongguan
Guangdong 523860 (CN)

(72) Inventor: XING, Jinqiang
Dongguan, Guangdong 523860 (CN)

(74) Representative: Taor, Simon Edward William et al
Venner Shipley LLP
200 Aldersgate
London EC1A 4HD (GB)

(54) **TRANSMISSION POWER ADJUSTMENT METHOD AND APPARATUS, TERMINAL, BASE STATION AND STORAGE MEDIUM**

(57)    Disclosed are a transmission power adjustment method and apparatus, a terminal, a base station and a storage medium, wherein same belong to the technical field of communications. The method comprises: a terminal acquiring an actual uplink duty cycle; and according to the actual uplink duty cycle, adjusting a transmission power upper limit of the terminal from a first transmission power upper limit to a second transmission power upper limit, wherein the second transmission power upper limit is determined on the basis of the first transmission power upper limit, the actual uplink duty cycle and the maximum uplink duty cycle corresponding to the first transmission power upper limit. In the above-mentioned solution, a terminal can adjust a transmission power upper limit in correspondence with an actual uplink duty cycle, that is to say, the terminal can moderately adjust the transmission power upper limit according to the value of the actual uplink duty cycle. Compared with an adjustment method involving directly carrying out a substantial power back-off, the solution shown in the present application can prevent excessive limitations from being imposed on the transmission power of a terminal, thereby improving the uplink data transmission effect of the terminal.

| |
|---|
| Acquire an actual uplink duty cycle — 301 |
| Adjust a transmission power upper limit of a terminal from a first transmission power upper limit to a second transmission power upper limit, wherein the second transmission power upper limit is determined on the basis of the first transmission power upper limit, the actual uplink duy cycle and the maximum uplink duty cycle corresponding to the first transmission power upper limit — 302 |

FIG. 3

**Description**

**TECHNICAL FIELD**

The present application relates to the field of communication technologies, and in particular, to a method, apparatus, terminal, base station, and storage medium for adjusting a transmit power.

**BACKGROUND**

In the communication in the frequency band below 6 GHz, the electromagnetic wave absorption ratio (Specific Absorption Rate, SAR) is an index parameter to measure an electromagnetic radiation intensity of the terminal to the human body. The communication standard has a strict index requirement on the SAR value of the electromagnetic radiation of the terminal.

In the related art, from the perspective of reducing the radiation time of the terminal, the terminal capability of a maximum uplink duty cycle (maxULdutycycle) is introduced, that is, the maximum uplink duty cycle that can be supported by the terminal in the case that the SAR requirement is met when the terminal reports to the base station that it performs uplink transmission with the maximum transmit power in a certain frequency band. When the terminal performs uplink transmission to the base station, if the actual uplink duty cycle exceeds the maximum uplink duty cycle, the terminal may return back the transmit power to a transmit power that can satisfy the SAR requirement in any uplink duty cycle.

In the solution of the above-mentioned related art, in order to meet the SAR requirement under any uplink duty cycle, the reduced transmit power value is usually low, thereby affecting the effect of uplink data transmission.

**SUMMARY**

Embodiments of the present application provide a method, apparatus, terminal, base station, and storage medium for adjusting a transmit power. The technical solutions are as follows.

In an aspect, the embodiment of the present application provides a method for adjusting a transmit power, the method is performed by a terminal, and the method includes:

acquiring an actual uplink duty cycle; and
adjusting an upper limit of a transmit power of the terminal from a first transmit power upper limit to a second transmit power upper limit, where the second transmit power upper limit is determined based on the first transmit power upper limit, the actual uplink duty cycle, and a maximum uplink duty cycle corresponding to the first transmit power upper limit.

In another aspect, the embodiment of the present application provides a method for adjusting a transmit power, the method is performed by a base station, and the method includes:

acquiring an actual uplink duty cycle of a terminal; and
adjusting an upper limit of a transmit power of the terminal from a first transmit power upper limit to a second transmit power upper limit, where the second transmit power upper limit is determined based on the first transmit power upper limit, the actual uplink duty cycle, and a maximum uplink duty cycle corresponding to the first transmit power upper limit.

In another aspect, the embodiment of the present application provides an apparatus for adjusting a transmit power, which is applied in a terminal, and the apparatus includes:

an actual duty cycle acquisition module, configured to acquire an actual uplink duty cycle; and
a power adjustment module, configured to adjust an upper limit of a transmit power of the terminal from a first transmit power upper limit to a second transmit power upper limit, where the second transmit power upper limit is determined based on the first transmit power upper limit, the actual uplink duty cycle, and a maximum uplink duty cycle corresponding to the first transmit power upper limit.

In another aspect, the embodiment of the present application provides an apparatus for adjusting a transmit power, which is applied in a base station, and the apparatus includes:

an actual duty cycle acquisition module, configured to acquire an actual uplink duty cycle of a terminal; and
a power adjustment module, configured to adjust an upper limit of a transmit power of the terminal from a first transmit power upper limit to a second transmit power upper limit, where the second transmit power upper limit is determined based on the first transmit power upper limit, the actual uplink duty cycle, and a maximum uplink duty cycle corresponding to the first transmit power upper limit.

In another aspect, the embodiment of the present application provides a terminal, the terminal includes a processor, a memory, and a transceiver, the memory stores a computer program, and the computer program is configured to be executed by the processor to implement the above-mentioned method for adjusting a transmit power.

In another aspect, the embodiment of the present application provides a base station, the base station includes a processor, a memory, and a transceiver, the memory stores a computer program, and the computer program is configured to be executed by the processor to implement the above-mentioned method for adjusting a transmit power.

In another aspect, the embodiment of the present application further provides a computer-readable storage medium, where a computer program is stored in the storage medium, and the computer program is loaded and executed by a processor to implement the above-mentioned method for adjusting a transmit power.

In another aspect, the embodiment of the present application further provides a computer-readable storage medium, where a computer program is stored in the storage medium, and the computer program is loaded and executed by a processor to implement the above-mentioned method for adjusting a transmit power.

In yet another aspect, the present application provides a computer program product, when the computer program product runs on a terminal, the terminal is enabled to perform the above-mentioned method for adjusting a transmit power.

In yet another aspect, the present application provides a computer program product, when the computer program product runs on a base station, the base station is enabled to perform the above-mentioned method for adjusting a transmit power.

The technical solutions provided in the embodiments of the present application may bring the following beneficial effects.

The actual uplink duty cycle of the terminal before the current moment is acquired; the second transmit power upper limit is determined according to the actual uplink duty cycle, the first transmit power upper limit of the terminal and the maximum uplink duty cycle corresponding to the first transmit power upper limit, and the upper limit of the transmit power of the terminal is adjusted from the first transmit power upper limit to the second transmit power upper limit. In the above solution, the terminal can adjust the upper limit of the transmit power according to the actual uplink duty cycle, that is, the terminal can appropriately adjust the upper limit of the transmit power according to the value of the actual uplink duty cycle. Compared with the adjustment method of directly performing a large power back-off, the solution shown in the present application can avoid excessively restricting the transmit power of the terminal, thereby improving the uplink data transmission effect of the terminal.

## BRIEF DESCRIPTION OF THE DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort.

FIG. 1 is a schematic diagram of a network architecture provided by an embodiment of the present application;
FIG. 2 exemplarily shows a corresponding relationship diagram between the transmit power before and after the back-off and an uplink slot duty cycle;
FIG. 3 is a flowchart of a method for adjusting a transmit power provided by an embodiment of the present application;
FIG. 4 is a flowchart of a method for adjusting a transmit power provided by an embodiment of the present application;
FIG. 5 is a flowchart of a method for adjusting a transmit power provided by an embodiment of the present application;
FIG. 6 is a block diagram of an apparatus for adjusting a transmit power provided by an embodiment of the present application;
FIG. 7 is a block diagram of an apparatus for adjusting a transmit power provided by an embodiment of the present application;
FIG. 8 is a schematic structural diagram of a terminal provided by an embodiment of the present application; and
FIG. 9 is a schematic structural diagram of a base station provided by an embodiment of the present application.

## DETAILED DESCRIPTION

In order to make the objectives, technical solutions and advantages of the present application more clear, the embodiments of the present application will be further described in detail below with reference to the accompanying drawings.

The network architecture and service scenarios described in the embodiments of the present application are for the purpose of illustrating the technical solutions of the embodiments of the present application more clearly, and do not constitute a limitation on the technical solutions provided by the embodiments of the present application. Those skilled in the art can know that with the evolution of network architecture and the emergence of new service scenarios, the technical solutions provided in the embodiment of the present application are also applicable to similar technical problems.

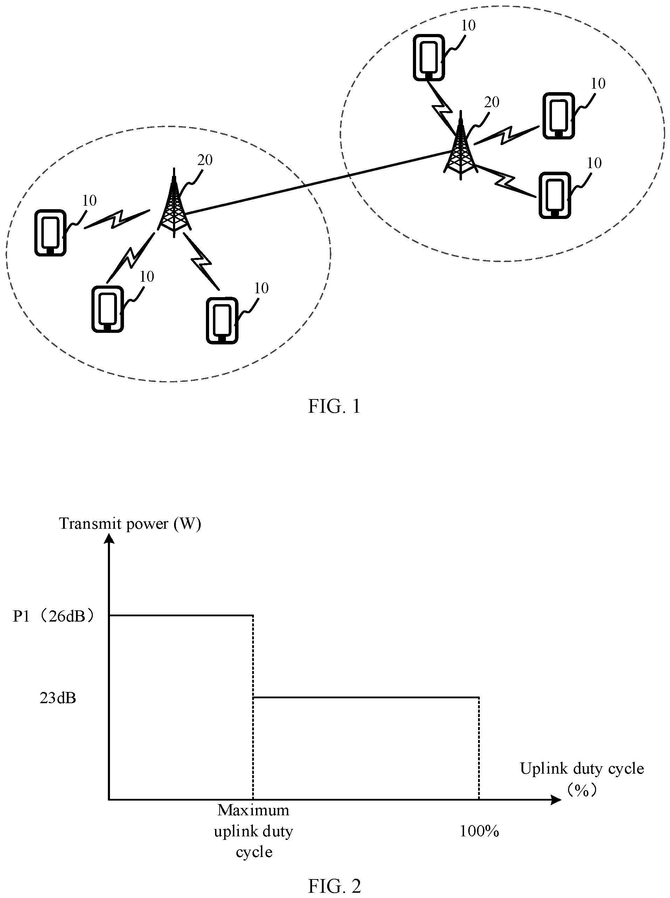

FIG. 1 shows a schematic diagram of a network architecture provided by an embodiment of the present application. With reference to FIG. 1, the network architecture may include: a terminal 10 and a base station 20.

The number of the terminals 10 is usually multiple, and one or more terminals 10 may be distributed in a cell managed by each base station 20. The terminal 10 may include various handheld devices, vehicle-mounted devices, wearable devices, computing devices with wireless communication functions, or other processing devices connected to the wireless modem, as well as various forms of User Equipment (UE), Mobile Station (MS), terminal device, etc. For convenience of description, in the embodiments of the present application, the devices mentioned above are collectively referred to as terminals.

The base station 20 is an apparatus deployed in the access network to provide the terminal 20 with a wireless communication function. The base station 20 may include various forms of macro base stations, micro base stations, relay stations, access points, and the like. In systems using different radio access technologies, the names of devices with base station functions may be different. For example, in the 5th-Generation New Radio (5G NR) system, they are called gNodeB or gNB. As communication technology evolves, the name "base station" may change. For convenience of description, in the embodiments of the present application, the above-mentioned apparatuses for providing the wireless communication function for the terminal 20 are collectively referred to as base stations.

The "5G NR system" in the embodiments of the present disclosure may also be referred to as a 5G system or an NR system, but those skilled in the art can understand its meaning. The technical solutions described in the embodiments of the present disclosure may be applicable to the 5G NR system, and may also be applicable to the subsequent evolution system of the 5G NR system.

The SAR index is an average measurement value of the terminal during communication in frequency bands below 6 GHz over a period of time. Generally speaking, the SAR value is positively correlated with the transmit power and the transmit time. That is to say, the higher the transmit power of the terminal, the higher the SAR value, and the longer the uplink transmit time of the terminal, the higher the SAR value.

In order to meet the SAR index, in one solution, the terminal may adopt a sensor (such as a distance sensor) to detect a distance between the terminal and the human body, and perform power back-off when it is detected that the terminal is close to the human body so as to reduce the transmit power and avoid the SAR value exceeding the standard. However, when the user uses the terminal, in many cases, the terminal will be close to the human body. Therefore, although this solution can effectively solve the problem that the SAR value exceeds the standard, it is necessary to perform uplink transmission with low transmit power in many cases, resulting in high loss of the transmit power, thereby seriously affecting the effect of uplink transmission.

In another solution, in the independent networking NR (NR Standalone, NR SA) and the dual connection between 4G wireless access network and 5G NR (Evolved-Universal Telecommunication Radio Access Terrestrial Radio Access-NR Dual Connection, EN-DC) and other scenarios, the terminal reports to the base station the maximum uplink duty cycle that can be supported under the condition that the SAR requirement is met when the terminal performs uplink transmission with the maximum transmit power in a certain frequency band. For example, in NR SA High Power UE (HPUE), a maxULdutycycle capability is defined for the frequency band below 6GHz, and a maxULdutycycle-EN-DC capability is defined in the Non-Standalone (NSA) HPUE. When the actual uplink duty cycle of the terminal exceeds the maximum uplink duty cycle, the terminal reduces the SAR value by means of a 3dBm power level back-off (the frequency band below 6GHz).

However, in the above solutions, the capability information reported by the terminal to the base station is one maximum uplink duty cycle supporting capability only corresponding to the maximum transmit power of the terminal. When the transmit power of the terminal is lower than the maximum transmit power, the terminal may potentially accept scheduling of a higher uplink duty cycle while satisfying the SAR. The processing method in the above solution is that as long as the actual uplink duty cycle of the terminal is higher than maxULdutycycle, the 3dBm power level back-off is performed, which limits the transmit power capability of the terminal.

For example, FIG. 2 exemplarily shows a corresponding relationship diagram between the transmit power before and after back-off and the uplink slot duty cycle.

As shown in FIG. 2, for the frequency band below 6GHz, the maximum uplink duty cycle of the terminal corresponding to the transmit power P1 (such as 26dBm) is Dutycycle1, and the corresponding maximum uplink duty cycle when the transmit power is 23dBm is 100%.

At a certain moment, the terminal uses the above-mentioned P1 as the upper limit of the transmit power to send uplink data, that is to say, when the terminal sends uplink data, it controls its own transmit power not to exceed P1. When sending uplink data with P1 as the upper limit of transmit power, the terminal may also obtain the actual uplink duty cycle and compare the actual uplink duty cycle with Dutycycle1. When the actual uplink duty cycle exceeds Dutycyclel, the terminal directly adjusts the upper limit of transmit power to P2 (i.e. a lower 23dbm) that can support 100% of uplink duty cycle, and when sending uplink data subsequently, P2 is used as the upper limit of transmit power for sending uplink data.

In the above process, when the actual uplink duty cycle of the terminal exceeds Dutycyclel, there is a jump of the upper limit of transmit power of 3dBm in the terminal, and the maximum uplink duty cycle also has a jump from Dutycyclel to 100%. As a result, the upper limit of the transmit power of the terminal is greatly restricted, thereby affecting the uplink data transmission effect of the terminal.

However, the subsequent embodiments of the present application propose a solution for non-linearly adjusting the upper limit of the transmit power of the terminal according to the actual uplink duty cycle of the terminal under the condition that the SAR requirement is satisfied, which can, when the actual uplink duty cycle of the terminal exceeds Dutycycle1 but is less than 100%, moderately adjust the upper limit of the transmit power to avoid excessively restricting the transmit power of the terminal, thereby improving the uplink data transmission effect of the terminal.

Hereinafter, the technical solutions of the present application will be described with reference to several exemplary embodiments.

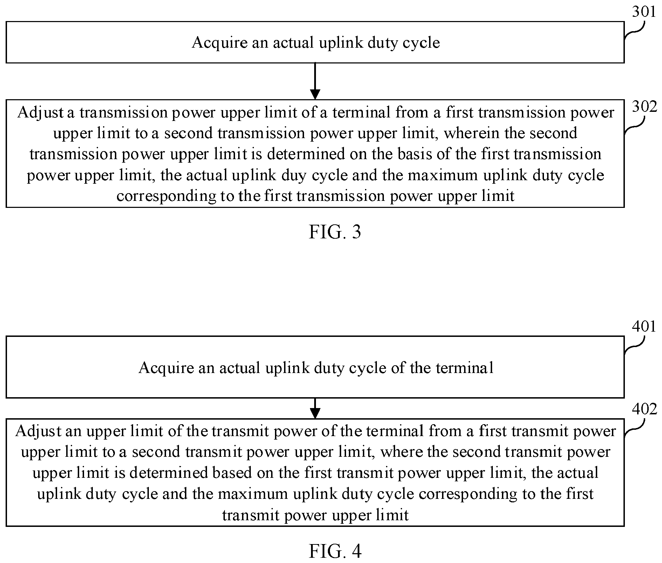

FIG. 3 shows a flowchart of a method for adjusting a transmit power provided by an embodiment of the present application. With reference to FIG. 3, the method may be applied to the terminal of the network architecture shown in FIG. 1, and the method may include the following steps.

In step 301, an actual uplink duty cycle is acquired.

The actual uplink duty cycle is a duty cycle that the terminal actually performs uplink transmission within a predetermined time length before the current moment.

The above uplink duty cycle refers to a ratio of the time that the terminal actually performs uplink transmission according to the scheduling of the base station after the base station schedules the terminal to perform uplink transmission to the total time.

Optionally, the above-mentioned actual uplink duty cycle may be a duty cycle that the terminal actually performs uplink transmission in a preset time period before the current moment. For example, the actual uplink duty cycle in the above preset time period refers to a ratio of the time that the terminal performs uplink transmission in the preset time period according to the scheduling information of the base station to the total time of the preset time period.

In the embodiment of the present application, in the process of data transmission with the base station, the terminal may count the actual uplink duty cycle in the preset time period before the current moment.

In step 302, an upper limit of the transmit power of the terminal is adjusted from a first transmit power upper limit to a second transmit power upper limit; where the second transmit power upper limit is determined based on the first transmit power upper limit, the actual uplink duty cycle and a maximum uplink duty cycle corresponding to the first transmit power upper limit.

In the embodiment of the present application, the upper limit of the transmit power of the terminal refers to the maximum transmit power that the terminal needs to follow when performing uplink transmission. That is to say, when the terminal performs uplink transmission, it needs to control its transmit power not to exceed the currently set transmit power upper limit.

In the embodiment of the present application, the terminal may adjust the upper limit of the transmit power according to the actual uplink duty cycle before the current moment, such as the actual uplink duty cycle within the above preset time period; that is, different actual uplink duty cycles may correspond to different upper limits of the transmit power of the terminal.

Optionally, the upper limit of the transmit power of the terminal changes nonlinearly with the actual uplink duty cycle.

In the embodiment of the present application, after the current moment, when the terminal continues to transmit uplink data, the transmit power during uplink data transmission is controlled not to exceed the second transmit power upper limit until the upper limit of the power is updated again.

To sum up, the solutions shown in the embodiments of the present application obtain the actual uplink duty cycle of the terminal before the current moment; determines the second transmit power upper limit according to the actual uplink duty cycle, the first transmit power limit of the terminal, and the maximum uplink duty cycle corresponding to the first transmit power upper limit, and adjusts the upper limit of the transmit power of the terminal from the first transmit power upper limit to the second transmit power upper limit. In the above solution, the terminal can adjust the upper limit of the transmit power corresponding to the actual uplink duty cycle, that is to say, the terminal can adjust the upper limit of the transmit power moderately according to the value of the actual uplink duty cycle. Compared with the adjustment method of directly performing a large power back-off, the solution shown in the present application can avoid excessively restricting the transmit power of the terminal, thereby improving the uplink data transmission effect of the terminal.

FIG. 4 shows a flowchart of a method for adjusting a transmit power provided by an embodiment of the present application. With reference to FIG. 4, the method may be applied to the base station of the network architecture shown in FIG. 1, and the method may include the following steps.

In step 401, an actual uplink duty cycle of the terminal is acquired.

The actual uplink duty cycle is a duty cycle that the terminal actually performs uplink transmission within a predetermined time length before a current moment.

In the embodiment of the present application, when the terminal and the base station perform data transmission, the time of uplink transmission and downlink reception may be scheduled in real time or pre-scheduled by the base station. The relevant information that the base station schedules the time of uplink transmission and downlink reception of the terminal may be referred to as the above-mentioned uplink and downlink time configuration information.

For example, the base station may use the uplink and downlink time configuration information to schedule the subsequent uplink transmission time and downlink reception time of the terminal in real time during data communication with the terminal, and the terminal performs uplink data sending at the uplink transmission time and performs downlink data reception at the downlink reception time according to the uplink and downlink time configuration information.

Alternatively, the base station may also use the uplink and downlink time configuration information in advance to schedule an uplink time interval in which the terminal can perform uplink transmission and a downlink time interval in which the terminal can perform downlink reception before performing data communication with the terminal. Afterwards, when the uplink transmission is required, the terminal selects an appropriate time from the uplink time interval to perform sending, and when there is a downlink receiving demand, the terminal may monitor within the downlink time interval and receive the downlink data when the downlink data is detected.

In the process of data transmission with the terminal, the base station may record the uplink sending time of the terminal, and perform statistics and obtain the actual uplink duty cycle of the terminal. For example, the base station may perform statistics on the uplink duty cycle of the terminal in the preset time period before the current moment, that is, a proportion of the time that the terminal actually performs uplink transmission in the preset time period to the total time of the preset time period.

In step 402, the upper limit of the transmit power of the terminal is adjusted from a first transmit power upper limit to a second transmit power upper limit, and the second transmit power upper limit is determined based on the first transmit power upper limit, the actual uplink duty cycle and the maximum uplink duty cycle corresponding to the first transmit power upper limit.

In the embodiment of the present application, the base station may, after the preset time period, adjust the upper limit of the transmit power of the terminal from the first transmit power upper limit to the second transmit power upper limit, and receive the uplink data sent by the terminal according to the second transmit power upper limit.

Optionally, the second transmit power upper limit has a non-linear corresponding relationship with the actual uplink duty cycle.

In the embodiment of the present application, similar to the terminal side, the base station side may also determine the updated transmit power upper limit of the terminal (that is, the above-mentioned second transmit power upper limit) based on the non-linear corresponding rule according to the actual uplink duty cycle of the terminal in the preset time period before the current moment, so as to subsequently receive uplink data sent by the terminal according to the second transmit power upper limit.

To sum up, in the solutions shown in the embodiments of the present application, the base station obtains the actual uplink duty cycle of the terminal; determines the second transmit power upper limit according to the actual uplink duty cycle, the first transmit power upper limit of the terminal and the maximum uplink duty cycle corresponding to the first transmit power upper limit, and adjusts the upper limit of the transmit power of the terminal from the first transmit power upper limit to the second transmit power upper limit. In the above solutions, the base station can determine the upper limit of the transmit power of the terminal corresponding to the actual uplink duty cycle of the terminal, that is, it can appropriately adjust the upper limit of the transmit power of the terminal according to the value of the actual uplink duty cycle. Compared with the adjustment method of directly triggering the terminal to perform a large power back-off, the solution shown in the present application can avoid excessively restricting the transmit power of the terminal, thereby improving the uplink data transmission effect of the terminal.

The solutions shown in the embodiments of the present application are applicable to NR SA, EN-DC, dual connection of 5G NR and 4G wireless access networks (NR-Evolved-Universal Telecommunication Radio Access Terrestrial Radio Access Dual Connection, EN-DC), Dual-connectivity (DC), carrier aggregation (CA), supplementary uplink (supplementary uplink, SUL) and other scenarios that solve SAR and other problems by reporting the maximum uplink duty cycle capability.

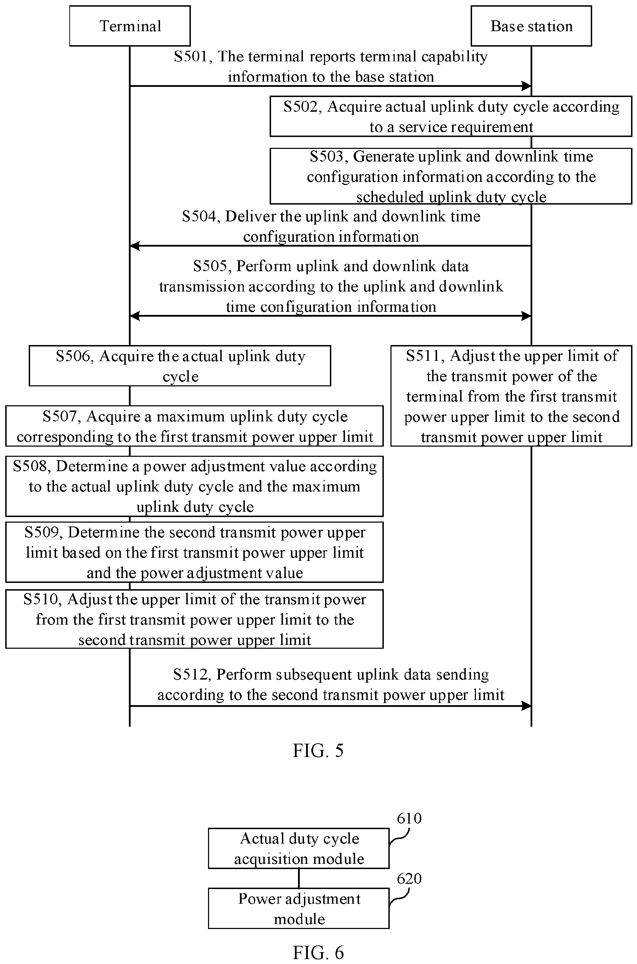

FIG. 5 shows a flowchart of a method for adjusting a transmit power provided by an embodiment of the present application. With reference to FIG. 5, the method may be applied to the network architecture shown in FIG. 1 and is performed by the terminal and the base station in FIG. 1 interactively. The method may include the following steps.

In step 501, the terminal reports terminal capability information to the base station, and the base station receives the terminal capability information.

The terminal capability information is used to indicate that the terminal has an ability to adjust the upper limit of the transmit power of the terminal according to the actual uplink duty cycle.

In the embodiment of the present application, when the terminal successfully accesses the base station, it may report its terminal capability information to the base station to notify the base station that it has the ability to adjust its own transmit power upper limit according to the actual uplink duty cycle, so that when performing uplink and downlink scheduling on the terminal subsequently, the base station may perform uplink and downlink scheduling based on the terminal capability information.

Optionally, the terminal capability information reported by the terminal to the base station may trigger the base station to perform the subsequent step 502 and the steps after step 502.

Optionally, if the terminal does not report the terminal capability information to the base station, or the terminal reports to the base station that it does not have the ability to adjust its own transmit power upper limit according to the actual uplink duty cycle, the base station may not perform the subsequent step 502.

In step 502, the base station acquires a service requirement of uplink and downlink service corresponding to the terminal, and obtains the scheduled uplink duty cycle according to the service requirement.

The base station may, in response to the terminal reporting the terminal capability information, perform the step of acquiring the service requirement of the uplink and downlink service corresponding to the terminal.

Optionally, the above service requirement may include at least one of a power requirement and a delay requirement.

The power requirement is used to indicate the transmit power required for transmitting the corresponding uplink or downlink service; and the delay requirement is used to indicate the transmission delay required for the transmission of the corresponding uplink or downlink service.

In the embodiment of the present application, the base station may determine the uplink duty cycle to be scheduled for the terminal corresponding to the uplink and downlink service according to the service requirement of the uplink and downlink service corresponding to the terminal.

For example, when the above service requirement includes the power requirement, it is assumed that the uplink or downlink service of the terminal requires a high power requirement, for example, the terminal needs to perform uplink sending with a relatively large transmit power. At this time, the base station may determine a relatively small uplink duty cycle scheduled for the terminal according to the power requirement, so that when the terminal performs power adjustment subsequently, it can increase the upper limit of transmit power as much as possible while meeting the SAR requirement to meet the power requirement of uplink and downlink service.

Alternatively, it is assumed that the power requirement for the uplink or downlink service of the terminal is low. For example, the terminal only needs to perform uplink transmission with a small transmit power. At this time, the base station may determine a relatively large uplink duty cycle scheduled for the terminal according to the power requirement, so that when the terminal performs power adjustment subsequently, it can reduce the upper limit of transmit power under the condition of meeting the SAR requirement to meet the relatively large uplink duty cycle, so as to improve the uplink transmission efficiency.

For example, when the above service requirement includes the delay requirement, it is assumed that the uplink or downlink service of the terminal requires a relatively high delay requirement. For example, the terminal and the base station need to transmit with a small delay. At this time, the base station can determine a relatively large uplink duty cycle scheduled for the terminal according to the delay requirement, so that when the terminal performs power adjustment in the future, it can reduce the upper limit of the transmit power while meeting the SAR requirement to meet the relatively large uplink duty cycle, thereby improving the uplink transmission efficiency, and thus reducing the uplink transmission delay between the terminal and the base station.

Alternatively, it is assumed that the uplink or downlink service of the terminal requires a relatively low delay. For example, a relatively large uplink delay may be allowed between the terminal and the base station. At this time, the base station can determine a relatively small uplink duty cycle scheduled for the terminal, so that when the terminal performs power adjustment later, it can increase the upper limit of the transmit power as much as possible while meeting the SAR requirement, so as to improve the uplink transmission effect of the terminal.

In step 503, the base station generates uplink and downlink time configuration information according to the scheduled uplink duty cycle.

In the embodiment of the present application, when scheduling the uplink and downlink time domain resources of the terminal within the preset time period subsequently, the base station may generate the uplink and downlink time configuration information according to the above-mentioned scheduled uplink duty cycle. That is to say, in the above uplink and downlink time configuration information, the ratio of the uplink time of the terminal in the preset time period to the total time in the preset time period is the above-mentioned scheduled uplink duty cycle.

In step 504, the base station delivers the uplink and downlink time configuration information to the terminal, and accordingly, the terminal receives the uplink and downlink time configuration information.

The uplink and downlink time configuration information is used to indicate the time configuration of uplink transmission and downlink reception of the terminal. For example, the uplink and downlink time configuration information may indicate the time configuration of uplink transmission and downlink reception of the terminal within the preset time period.

In the embodiment of the present application, when the base station performs dynamic scheduling on the uplink and downlink resources of the terminal, the base station may deliver the above-mentioned generated uplink and downlink time configuration information to the terminal, and accordingly, the terminal may receive the uplink and downlink time configuration information delivered by the base station.

In step 505, the terminal and the base station perform uplink and downlink data transmission according to the above-mentioned uplink and downlink time configuration information.

In the embodiment of the present application, after receiving the above-mentioned uplink and downlink time configuration information, the terminal may perform data transmission with the base station according to the uplink time and downlink time configured by the uplink and downlink time configuration information.

For example, the terminal sends uplink data to the base station within the uplink time configured by the uplink and downlink time configuration information; and the terminal receives downlink data sent by the base station within the downlink time configured by the uplink and downlink time configuration information.

In step 506, the terminal acquires the actual uplink duty cycle.

The actual uplink duty cycle is a duty cycle that the terminal actually performs uplink sending within a predetermined time length before the current moment.

Optionally, the terminal may obtain the preset time period and the actual uplink duty cycle.

In the embodiment of the present application, the above-mentioned preset time period is a time period commonly known by the base station and the terminal.

The preset time period may be a predefined time period. For example, it may be pre-defined in the terminal and the base station respectively, and starting from the terminal accessing the base station, each fixed time period is used as one preset time period.

Alternatively, the above-mentioned preset time period may also be configured by the base station for the terminal. For example, the base station may deliver preset time period configuration information to the terminal to indicate a start point and an end point of the above-mentioned preset time period.

When the above-mentioned preset time period is configured by the base station for the terminal, the base station may configure the preset time period for the terminal in a semi-static or dynamic manner.

For example, in the case of semi-static configuration, when the terminal successfully accesses the base station, the base station may send a preset time period configuration table to the terminal, and the preset time period configuration table may include various lengths of time periods. In the process of data transmission between the base station and the terminal, the base station may send time period length indication information to the terminal, and the terminal may determine the start point of the preset time period according to the time-domain position of a channel/signal where the time period length indication information is located, or, according to the time-domain position of other designated channels/signals, determine the duration of the preset time period from the preset time period configuration table according to the time period length indication information, and determine the above-mentioned preset time period according to the start point of the preset time period and the duration of the preset time period.

Alternatively, in the case of dynamic configuration, in the process of data transmission between the base station and the terminal, the base station may send time period length indication information to the terminal, and the time period length indication information may directly include the duration of the preset time period; the terminal may determine the start point of the preset time period according to the time-domain position of the channel/signal where the time period length indication information is located, or, according to the time-domain position of other specified channels/signals, and determine the above-mentioned preset time period according to the duration of the preset time period included in the time period length indication information and the start point of the preset time period.

In the embodiment of the present application, after determining the above preset time period, the terminal may obtain the actual uplink duty cycle within the preset time period by statistics.

In step 507, the terminal acquires the maximum uplink duty cycle corresponding to the first transmit power upper limit.

The above-mentioned first transmit power upper limit may be an upper limit of transmit power used by the terminal to perform uplink sending before the current moment.

In a possible implementation manner, the above-mentioned first transmit power upper limit may be an upper limit of transmit power used by the terminal when sending uplink data within the above-mentioned preset time period. In other words, the above-mentioned first transmit power upper limit is an upper limit of transmit power used by the terminal when sending uplink data according to the above-mentioned uplink and downlink time configuration information.

In the embodiment of the present application, the terminal may determine the maximum uplink duty cycle corresponding to the first transmit power upper limit of the terminal according to the value of the first transmit power upper limit, where the maximum uplink duty cycle refers to the maximum value of the uplink duty cycle for the terminal to meet the SAR requirement when the transmit power of the terminal is the above-mentioned first transmit power upper limit.

Optionally, the maximum uplink duty cycle corresponding to each upper limit of transmit power may be preset in the terminal, and the terminal may query the corresponding maximum uplink duty cycle according to the first transmit power upper limit.

Alternatively, the terminal may also calculate the corresponding maximum uplink duty cycle according to the first transmit power upper limit based on a preset conversion relationship (such as a preset conversion formula).

In step 508, the terminal determines a power adjustment value according to the actual uplink duty cycle and the maximum uplink duty cycle.

Optionally, if the actual uplink duty cycle is less than the maximum uplink duty cycle, logarithmic function processing is performed on a first ratio to obtain the power adjustment value; where the first ratio is a ratio between the maximum uplink duty cycle and the actual uplink duty cycle.

The above-mentioned ratio (i.e., the first ratio) between the maximum uplink duty cycle and the actual uplink duty cycle refers to a ratio with the maximum uplink duty cycle as the numerator and the actual uplink duty cycle as the denominator.

Optionally, if the actual uplink duty cycle is greater than the maximum uplink duty cycle, logarithmic function processing is performed on a second ratio to obtain the power adjustment value; where the second ratio is a ratio between the actual uplink duty cycle and the maximum uplink duty cycle.

The above-mentioned ratio (i.e., the second ratio) between the actual uplink duty cycle and the maximum uplink duty cycle refers to a ratio with the actual uplink duty cycle as the numerator and the maximum uplink duty cycle as the denominator.

In step 509, the terminal determines the second transmit power upper limit based on the first transmit power upper limit and the power adjustment value.

If the actual uplink duty cycle is less than the maximum uplink duty cycle, a sum of the first transmit power upper limit and the power adjustment value is determined as the second transmit power upper limit.

If the actual uplink duty cycle is less than the maximum uplink duty cycle, a difference between the first transmit power upper limit and the power adjustment value is determined as the second transmit power upper limit.

In the embodiment of the present application, under the uplink duty cycle subsequently scheduled by the base station for the terminal, the updated terminal can meet the Specific Absorption Rate (SAR) requirement when sending uplink data according to the second transmit power upper limit.

In the embodiment of the present application, the terminal can appropriately reduce or increase the upper limit of the transmit power according to the difference between the actual uplink duty cycle and the maximum uplink duty cycle, so as to take into account both the uplink duty cycle and the transmit power as much as possible while meeting the SAR requirement. There are two ways to obtain the updated upper limit of transmit power as mentioned above: raising and lowering.

First, the case of raising the upper limit of transmit power.

In a possible implementation manner, when the above-mentioned actual uplink duty cycle is less than the maximum uplink duty cycle, the terminal can appropriately increase the upper limit of the transmit power, so as to ensure the transmit power of the terminal under the condition that the SAR requirement is met, thereby guaranteeing the effect of uplink data transmission. At this time, the terminal can appropriately determine a second transmit power upper limit that is higher than the first transmit power upper limit in the following manner:

in response to the actual uplink duty cycle being less than the maximum uplink duty cycle, processing the first ratio by a logarithmic function to obtain a power increase value (that is, the above-mentioned power adjustment value); increasing the power increase value on the basis of the first transmit power upper limit to obtain the second transmit power upper limit.

In the above possible implementation manner, in order to improve the transmit power of the terminal as much as possible while meeting the SAR requirement, in the embodiment of the present application, the terminal may determine the power increase value by performing logarithmic processing on the ratio between the maximum uplink duty cycle and the actual uplink duty cycle, and combine the power increase value on the basis of the first transmit power upper limit to obtain the above-mentioned second transmit power upper limit with a moderate increase.

For example, the above-mentioned formula for increasing the power increase value on the basis of the first transmit power upper limit to obtain the second transmit power upper limit may be as follows:

$$P1+10*lg(maxUplinkdutycycle/realUplinkdutycycle);$$

where realUplinkdutycycle is the actual uplink duty cycle, maxUplinkdutycycle is the maximum uplink duty cycle, and P1 is the first transmit power upper limit. Through the above formula, the terminal calculates the logarithmic value of the ratio between the maximum uplink duty cycle and the actual uplink duty cycle based on 10, and increases the logarithmic value by 10 times on the basis of the first transmit power upper limit P1 to obtain the updated upper limit of the transmit power, in this way, the upper limit of the transmit power of the terminal can be adjusted appropriately under the condition of satisfying the SAR requirement, so as to increase the upper limit of the transmit power of the terminal as much as possible, thereby improving the uplink transmission effect of the terminal.

Second, the case of lowering the upper limit of transmit power.

In another possible implementation manner, when the above-mentioned actual uplink duty cycle is greater than the maximum uplink duty cycle, the terminal may appropriately reduce the upper limit of the transmit power to preferentially ensure the data transmission rate. At this time, the terminal can appropriately determine an updated transmit power upper limit that is lower than the preset transmit power upper limit in the following manner:

in response to the actual uplink duty cycle being greater than the maximum uplink duty cycle, processing the second ratio by a logarithmic function to obtain a power reduction value; and reducing the power reduction value on the basis of the first transmit power upper limit to obtain the second transmit power upper limit.

In the above possible implementation manner, in order to ensure that one transmit power upper limit is not excessively reduced as much as possible while meeting the SAR requirement, in the embodiment of the present application, the terminal may determine the power reduction value (that is, the above-mentioned power adjustment value) by performing a logarithmic processing on the ratio between the actual uplink duty cycle and the maximum uplink duty cycle, and obtain the above-mentioned second transmit power upper limit with a moderate reduction by combining the power reduction value on the basis of the first transmit power upper limit.

For example, the above formula for reducing the power reduction value based on the preset transmit power upper limit to obtain the updated transmit power upper limit may be as follows:

$$P1-10*lg(realUplinkdutycycle/maxUplinkdutycycle).$$

Through the above formula, the terminal calculates the logarithm value of the ratio between the actual uplink duty cycle and the maximum uplink duty cycle based on 10, and subtracts 10 times the logarithmic value from P1 to obtain the updated transmit power upper limit. In this way, the upper limit of the transmit power of the terminal can be appropriately adjusted under the condition of meeting the SAR requirement, so as to avoid excessive restrictions on the transmit power of the terminal, thereby improving the uplink transmission effect of the terminal.

In step 510, the terminal adjusts the upper limit of the transmit power from the first transmit power upper limit to the second transmit power upper limit.

After the terminal determines the above second transmit power upper limit, the terminal may adjust the currently used upper limit of the transmit power from the first transmit power upper limit to the second transmit power upper limit.

In another possible implementation manner, the terminal may also determine a power increase value or a power reduction value in step 508, and in step 510, by directly adding the above-mentioned power increase value to the preset transmit power or subtracting the above-mentioned power reduction value from the preset transmit power, the adjustment of transmit power is realized.

In step 511, the base station adjusts the upper limit of the transmit power of the terminal from the first transmit power upper limit to the second transmit power upper limit.

In the embodiment of the present application, in addition to the terminal adjusting its own upper limit of transmit power, the base station side also adjusts the upper limit of the transmit power of the terminal to the above-mentioned second transmit power according to the actual uplink duty cycle of the terminal before the current moment, so that the uplink data sent by the terminal can be better received in the future.

When the base station adjusts the upper limit of the transmit power of the terminal to the second transmit power upper limit, the above-mentioned second transmit power upper limit may also be determined according to the actual uplink duty cycle of the terminal within the preset time period.

The manner in which the base station determines the second transmit power upper limit according to the actual uplink duty cycle of the terminal is similar to the manner in which the terminal determines the second transmit power upper limit in steps 507 to 508, and will not be repeated here.

In step 512, the terminal performs subsequent uplink data sending according to the second transmit power upper limit, and accordingly, the base station receives the uplink data sent by the terminal according to the second transmit power upper limit.

In the embodiment of the present application, after the above preset time period, the terminal may send uplink data to the base station according to the adjusted second transmit power upper limit, that is, after the preset time period, the transmit power of the terminal when sending uplink data to the base station does not exceed the second transmit power upper limit; correspondingly, when receiving the uplink data sent by the terminal, the base station can optimize the receiving process according to the second transmit power upper limit.

Optionally, after the preset time period, when performing uplink and downlink scheduling for the terminal, the base station may generate uplink and downlink time configuration information for the terminal according to the maximum uplink duty cycle corresponding to the second transmit power upper limit and deliver it to the terminal. That is to say, the uplink and downlink time configuration information generated by the base station after the preset time period may make the terminal meet the SAR requirement under the condition of the updated transmit power upper limit as much as possible. In the embodiment of the present application, by performing nonlinear processing on the actual uplink duty cycle of the terminal together with the upper limit of transmit power, the terminal can schedule a relatively high uplink duty cycle when the transmit power is low, thereby increasing the uplink duty cycle of the terminal.

The maximum uplink duty cycle corresponding to the second transmit power upper limit may be determined according to the second transmit power upper limit after obtaining the second transmit power upper limit and reported to the base station by the terminal.

Alternatively, the maximum uplink duty cycle corresponding to the second transmit power upper limit may also be determined and stored by the base station according to the second transmit power upper limit after acquiring the second transmit power upper limit.

To sum up, the solution shown in the embodiment of the present application obtains the actual uplink duty cycle of the terminal; determines the second transmit power upper limit according to the actual plink duty cycle, the first transmit power upper limit of the terminal and the maximum uplink duty cycle corresponding to the first transmit power upper limit, and adjusts the upper limit of the transmit power of the terminal from the first transmit power upper limit to the second transmit power upper limit; in the above solution, the terminal and the base station can perform non-linear adjustment on the upper limit of the transmit power of the terminal corresponding to the actual uplink duty cycle of the terminal, that is to say, the terminal and the base station can moderately adjust the upper limit of the transmit power of the terminal according to the value of the actual uplink duty cycle of the terminal. Compared with the adjustment method of directly performing a large power back-off, the solution shown in the present application can avoid excessively restricting the transmit power of the terminal, thereby improving the uplink data transmission effect of the terminal.

The following are apparatus embodiments of the present application, which may be used to execute the method embodiments of the present application. For details not disclosed in the apparatus embodiments of the present application, the method embodiments of the present application may be referred to.

FIG. 6 shows a block diagram of an apparatus for adjusting a transmit power provided by an embodiment of the present application. With reference to FIG. 6, the apparatus has the function of implementing the above-mentioned method example for adjusting the transmit power, and the function may be implemented by hardware, or by executing corresponding software in hardware. The apparatus may be the terminal described above, or may be set in the terminal. As shown in FIG. 6, the apparatus may include:

an actual duty cycle acquisition module 610, configured to acquire an actual uplink duty cycle;
a power adjustment module 620, configured to adjust an upper limit of transmit power of the terminal from a first transmit power upper limit to a second transmit power upper limit, and the second transmit power upper limit is determined based on the first transmit power upper limit, the actual uplink duty cycle and a maximum uplink duty cycle corresponding to the first transmit power upper limit.

In an exemplary solution, the apparatus further includes:

a maximum duty cycle acquisition module, configured to acquire the maximum uplink duty cycle;
the power adjustment module 620 includes:
an adjustment value determination unit, configured to determine a power adjustment value according to the actual uplink duty cycle and the maximum uplink duty cycle;
a power upper limit determination unit, configured to determine the second transmit power upper limit based on the first transmit power upper limit and the power adjustment value.

In an exemplary solution, the adjustment value determination unit is configured to perform a logarithmic function processing on a first ratio to obtain the power adjustment value if the actual uplink duty cycle is less than the maximum uplink duty cycle; where the first ratio is a ratio between the maximum uplink duty cycle and the actual uplink duty cycle.

In an exemplary solution, the power upper limit determination unit is configured to determine a sum of the first transmit power upper limit and the power adjustment value as the second transmit power upper limit if the actual uplink duty cycle is less than the maximum uplink duty cycle.

In an exemplary solution, the adjustment value determination unit is configured to perform a logarithmic function processing on a second ratio to obtain the power adjustment value if the actual uplink duty cycle is greater than the maximum uplink duty cycle; where the second ratio is a ratio between the actual uplink duty cycle and the maximum uplink duty cycle.

In an exemplary solution, the power upper limit determination unit is configured to determine a difference between the first transmit power upper limit and the power adjustment value as the second transmit power upper limit if the actual uplink duty cycle is less than the maximum uplink duty cycle.

In an exemplary solution, the apparatus further includes:

a capability information reporting module, configured to report terminal capability information to the base station before the actual duty cycle acquisition module 610 acquires the actual uplink duty cycle, where the terminal capability information is used to indicate that the terminal has an ability to adjust the upper limit of the transmit power of the terminal according to the actual uplink duty cycle and the maximum uplink duty cycle.

In an exemplary solution, the terminal satisfies the specific absorption rate (SAR) requirement when sending uplink data according to the second transmit power upper limit under an uplink duty cycle subsequently scheduled by the base station for the terminal.

In an exemplary solution, the apparatus further includes:

a configuration information receiving module, configured to receive uplink and downlink time configuration information issued by the base station before the actual duty cycle acquisition module 610 acquires the actual uplink duty cycle, where the uplink and downlink time configuration information is used to indicate a time configuration of uplink transmission and downlink reception of the terminal;
where the base station obtains the service requirement of uplink and downlink services corresponding to the terminal, obtains the scheduled uplink duty cycle according to the service requirement, and generates the uplink and downlink time configuration information according to the scheduled uplink duty cycle.

In an exemplary solution, the service requirement includes at least one of a power requirement and a delay requirement.

To sum up, in the solution shown in the embodiment of the present application, the terminal obtains the actual uplink duty cycle of the terminal before the current moment; determines the second transmit power upper limit according to the actual uplink duty cycle, the first transmit power limit of the terminal, and the maximum uplink duty cycle corresponding to the first transmit power upper limit, and adjusts the upper limit of the transmit power of the terminal from the first transmit power upper limit to the second transmit power upper limit; in the above solution, the terminal can adjust the upper limit of the transmit power corresponding to the actual uplink duty cycle, that is, the terminal can adjust the upper limit of the transmit power moderately according to the value of the actual uplink duty cycle. Compared with the adjustment method of directly performing a large power back-off, the solution shown in the present application can avoid excessively restricting the transmit power of the terminal, thereby improving the uplink data transmission effect of the terminal.

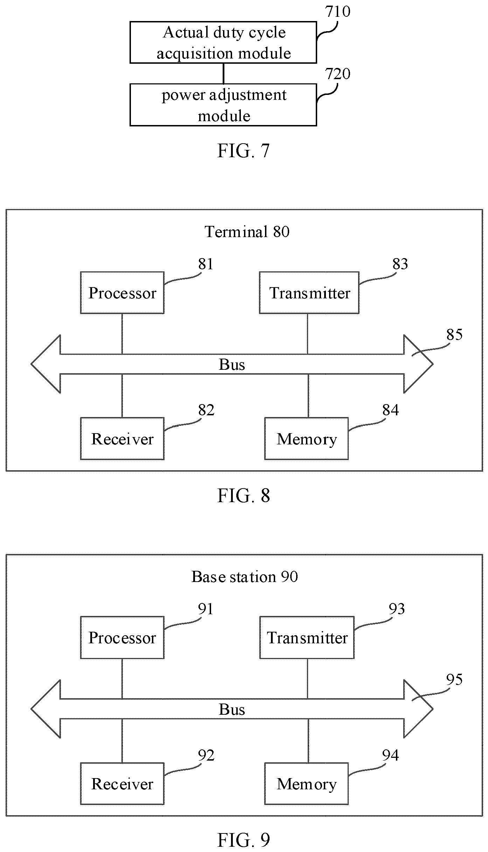

FIG. 7 shows a block diagram of an apparatus for adjusting a transmit power provided by an embodiment of the present application. With reference to FIG. 7, the apparatus has the function of implementing the above-mentioned method example for adjusting the transmit power, and the function may be implemented by hardware, or by executing corresponding software in hardware. The apparatus may be the base station described above, or may be set in the base station. As shown in FIG. 7, the apparatus may include:

an actual duty cycle acquisition module 710, configured to acquire an actual uplink duty cycle of the terminal;
a power adjustment module 720, configured to adjust an upper limit of transmit power of the terminal from a first transmit power upper limit to a second transmit power upper limit, where the second transmit power upper limit is determined based on the first transmit power upper limit, the actual uplink duty cycle and a maximum uplink duty cycle corresponding to the first transmit power upper limit.

In an exemplary solution, the apparatus further includes:

a service requirement acquisition module, configured to acquire a service requirement of an uplink and downlink service corresponding to the terminal before the actual duty cycle acquisition module 610 acquires the actual uplink duty cycle of the terminal;
an actual duty cycle determination module, configured to determine a scheduled uplink duty cycle according to the service requirement;
a scheduling information generation module, configured to generate uplink and downlink time configuration information according to the scheduled uplink duty cycle, where the uplink and downlink time configuration information is used to indicate a time configuration of uplink transmission and downlink reception of the terminal;

a configuration information delivery module, configured to deliver the uplink and downlink time configuration information to the terminal.

In an exemplary solution, the service requirement includes at least one of a power requirement and a delay requirement.

In an exemplary solution, the service requirement acquisition module is configured to, in response to the terminal capability information being reported by the terminal, execute the step of acquiring the service requirement of the uplink and downlink service corresponding to the terminal; where the terminal capability information is used to indicate that the terminal has an ability to adjust the upper limit of the transmit power of the terminal according to the actual uplink duty cycle.

To sum up, in the solutions shown in the embodiments of the present application, the base station obtains the actual uplink duty cycle of the terminal; determines the second transmit power upper limit according to the actual uplink duty cycle, the first transmit power limit of the terminal, and the maximum uplink duty cycle corresponding to the first transmit power upper limit, and adjusts the upper limit of the transmit power of the terminal from the first transmit power upper limit to the second transmit power upper limit. In the above solution, the base station can determine the upper limit of the transmit power of the terminal corresponding to the actual uplink duty cycle of the terminal, that is, it can appropriately adjust the upper limit of the transmit power of the terminal according to the value of the actual uplink duty cycle of the terminal. Compared with the adjustment method of directly triggering the terminal to perform a large power back-off, the solution shown in the present application can avoid excessively restricting the transmit power of the terminal, thereby improving the uplink data transmission effect of the terminal.

It should be noted that, when the apparatus provided in the above embodiment realizes its functions, only the division of the above functional modules is used as an example for illustration. In practical applications, the above functions may be allocated to different functional modules to be completed according to actual needs. That is, the content structure of the device is divided into different functional modules to complete all or part of the functions described above.

Regarding the apparatus in the above-mentioned embodiment, the specific manner in which each module performs the operation has been described in detail in the embodiment of the method, and will not be described in detail here.

FIG. 8 shows a schematic structural diagram of a terminal 80 provided by an embodiment of the present application. The terminal 80 may include: a processor 81, a receiver 82, a transmitter 83, a memory 84 and a bus 85.

The processor 81 includes one or more processing cores, and the processor 81 executes various functional applications and information processing by running software programs and modules.

The receiver 82 and the transmitter 83 may be implemented as one communication component, which may be a communication chip. The communication chip may also be referred to as a transceiver.

The memory 84 is connected to the processor 81 via the bus 85.

The memory 84 may be used to store a computer program, and the processor 81 is used to execute the computer program, so as to realize the various steps performed by the terminal in the above method embodiments.

Additionally, the memory 84 may be implemented by any type or combination of volatile or non-volatile storage devices including, but not limited to, magnetic or optical disks, electrically erasable programmable Read Only Memory (EEPROM), Erasable Programmable Read Only Memory (EPROM), Static Anytime Access Memory (SRAM), Read Only Memory (ROM), Magnetic Memory, Flash Memory, Programmable Read Only Memory (PROM).

In an exemplary embodiment, the terminal includes a processor, a memory, and a transceiver (the transceiver may include a receiver for receiving information and a transmitter for sending information).

The processor is configured to acquire an actual uplink duty cycle.

The processor is configured to adjust an upper limit of the transmit power of the terminal from a first transmit power upper limit to a second transmit power upper limit, and the second transmit power upper limit is determined based on the first transmit power upper limit, the actual uplink duty cycle and a maximum uplink duty cycle corresponding to the first transmit power upper limit.

In an exemplary solution, the processor is further configured to acquire the maximum uplink duty cycle;

when the upper limit of the transmit power of the terminal is adjusted from the first transmit power upper limit to the second transmit power upper limit, the processor is specifically configured to:
determine a power adjustment value according to the actual uplink duty cycle and the maximum uplink duty cycle;
determine the second transmit power upper limit based on the first transmit power upper limit and the power adjustment value.

In an exemplary solution, when determining the power adjustment value according to the actual uplink duty cycle and the maximum uplink duty cycle, the processor is specifically configured to:
if the actual uplink duty cycle is less than the maximum uplink duty cycle, perform logarithmic function processing on a first ratio to obtain the power adjustment value; the first ratio is a ratio between the maximum uplink duty cycle and the actual uplink duty cycle.

In an exemplary solution, when determining the second transmit power upper limit based on the first transmit power upper limit and the power adjustment value, the processor is specifically configured to:

if the actual uplink duty cycle is less than the maximum uplink duty cycle, determine a sum of the first transmit power upper limit and the power adjustment value as the second transmit power upper limit.

In an exemplary solution, when determining the power adjustment value according to the actual uplink duty cycle and the maximum uplink duty cycle, the processor is specifically configured to:

if the actual uplink duty cycle is greater than the maximum uplink duty cycle, perform logarithmic function processing on a second ratio to obtain the power adjustment value; the second ratio is a ratio between the actual uplink duty cycle and the maximum uplink duty cycle.

In an exemplary solution, when determining the second transmit power upper limit based on the first transmit power upper limit and the power adjustment value, the processor is specifically configured to:

if the actual uplink duty cycle is less than the maximum uplink duty cycle, determine a difference between the first transmit power upper limit and the power adjustment value as the second transmit power upper limit.

In an exemplary approach, the transceiver is configured to:

before the processor acquires the actual uplink duty cycle, report terminal capability information to the base station, where the terminal capability information is used to indicate that the terminal has the ability to adjust the upper limit of the transmit power of the terminal according to the actual uplink duty cycle and the maximum uplink duty cycle.

The transceiver is configured to satisfy the specific absorption rate (SAR) requirement when the terminal sends uplink data according to the second transmit power upper limit under the uplink duty cycle subsequently scheduled by the base station for the terminal.

In an exemplary solution, the transceiver is further configured to, before the processor acquires the actual uplink duty cycle, receive uplink and downlink time configuration information issued by the base station, the uplink and downlink time configuration information is used to indicate the time configuration of uplink transmission and downlink reception of the terminal.

For the uplink and downlink time configuration information, the base station obtains the service requirement of the uplink and downlink service corresponding to the terminal, obtains the scheduled uplink duty cycle according to the service requirement, and generates the uplink and downlink time configuration information according to the scheduled uplink duty cycle.

In an exemplary solution, the service requirement includes at least one of a power requirement and a delay requirement.

FIG. 9 shows a schematic structural diagram of a base station 90 provided by an embodiment of the present application. The base station 90 may include: a processor 91, a receiver 92, a transmitter 93, a memory 94, and a bus 95.

The processor 91 includes one or more processing cores, and the processor 91 executes various functional applications and information processing by running software programs and modules.

The receiver 92 and the transmitter 93 may be implemented as one communication component, which may be a communication chip. The communication chip may also be referred to as a transceiver.

The memory 94 is connected to the processor 91 via a bus 95.

The memory 94 may be used to store a computer program, and the processor 91 is used to execute the computer program, so as to implement various steps performed by the base station in the above method embodiments.

Additionally, memory 94 may be implemented by any type or combination of volatile or non-volatile storage devices including, but not limited to, magnetic or optical disks, electrically erasable programmable Read Only Memory (EEPROM), Erasable Programmable Read Only Memory (EPROM), Static Radom Access Memory (SRAM), Read Only Memory (ROM), Magnetic Memory, Flash Memory, Programmable Read Only Memory (PROM).

In an exemplary embodiment, the base station includes a processor, a memory, and a transceiver (the transceiver may include a receiver for receiving information and a transmitter for sending information).

The processor is configured to obtain the actual uplink duty cycle of the terminal.

The processor is further configured to adjust the upper limit of transmit power of the terminal from a first transmit power upper limit to a second transmit power upper limit, and the second transmit power upper limit is determined based on the first transmit power upper limit, the actual uplink duty cycle and the maximum uplink duty cycle corresponding to the first transmit power upper limit.

In an exemplary solution, the processor is further configured to acquire a service requirement of uplink and downlink service corresponding to the terminal before acquiring the actual uplink duty cycle of the terminal; determine scheduled uplink duty cycle according to the service requirement; and generate the uplink and downlink time configuration information according to the scheduled uplink duty cycle, where the uplink and downlink time configuration information is used to indicate the time configuration of uplink transmission and downlink reception of the terminal.

The transceiver is further configured to deliver the uplink and downlink time configuration information to the terminal.

In an exemplary solution, the service requirement includes at least one of a power requirement and a delay requirement.

In an exemplary solution, when acquiring the service requirement of the uplink and downlink service corresponding to the terminal, the processor is configured to, in response to the terminal reporting the terminal capability information, perform the step of acquiring the service requirement of uplink and downlink service corresponding to the terminal; the terminal capability information is used to indicate that the terminal has the ability to adjust the upper limit of the transmit power of the terminal according to the actual uplink duty cycle.

The embodiments of the present application further provide a computer-readable storage medium, where a computer program is stored in the storage medium, and the computer program is loaded and executed by a processor to implement the above method for adjusting a transmit power.

The embodiments of the present application further provide a computer-readable storage medium, where a computer program is stored in the storage medium, and the computer program is loaded and executed by a processor to implement the above method for adjusting a transmit power.

The present application also provides a computer program product, when the computer program product runs on the terminal, the terminal is enabled to perform the above-mentioned method for adjusting a transmit power.

The present application also provides a computer program product, when the computer program product runs on the base station, the base station is enabled to perform the above-mentioned method for adjusting a transmit power.

Those skilled in the art should realize that, in one or more of the above examples, the functions described in the embodiments of the present application may be implemented by hardware, software, firmware, or any combination thereof. When being implemented in software, the functions may be stored in a computer-readable medium or transmitted as one or more instructions or code on the computer-readable medium. The computer-readable medium includes both a computer storage medium and a communication medium, and the communication medium includes any medium that facilitates transfer of a computer program from one place to another. The storage medium may be any available medium that can be accessed by a general purpose or special purpose computer.

The above are only exemplary embodiments of the present application and are not intended to limit the present application. Any modifications, equivalent replacements, improvements, etc. made within the spirit and principles of the present application shall be included in the protection scope of the present application.

## Claims

1. A method for adjusting a transmit power, wherein the method is performed by a terminal, and the method comprises:

   acquiring an actual uplink duty cycle; and
   adjusting an upper limit of a transmit power of the terminal from a first transmit power upper limit to a second transmit power upper limit, wherein the second transmit power upper limit is determined based on the first transmit power upper limit, the actual uplink duty cycle, and a maximum uplink duty cycle corresponding to the first transmit power upper limit.

2. The method according to claim 1, further comprising:

   acquiring the maximum uplink duty cycle;
   wherein the adjusting the upper limit of the transmit power of the terminal from the first transmit power upper limit to the second transmit power upper limit comprises:

   determining a power adjustment value according to the actual uplink duty cycle and the maximum uplink duty cycle; and
   determining the second transmit power upper limit based on the first upper limit transmit power and the power adjustment value.

3. The method according to claim 2, wherein the determining the power adjustment value according to the actual uplink duty cycle and the maximum uplink duty cycle comprises:
   in response to that the actual uplink duty cycle is less than the maximum uplink duty cycle, performing a logarithmic function processing on a first ratio to obtain the power adjustment value; wherein the first ratio is a ratio between the maximum uplink duty cycle and the actual uplink duty.

4. The method according to claim 3, wherein the determining the second transmit power upper limit based on the first transmit power upper limit and the power adjustment value comprises:

in response to that the actual uplink duty cycle is less than the maximum uplink duty cycle, determining a sum of the first transmit power upper limit and the power adjustment value as the second transmit power upper limit.

5. The method according to claim 2, wherein the determining the power adjustment value according to the actual uplink duty cycle and the maximum uplink duty cycle comprises:
in response to that the actual uplink duty cycle is greater than the maximum uplink duty cycle, performing a logarithmic function processing on a second ratio to obtain the power adjustment value; wherein the second ratio is a ratio between the actual uplink duty cycle and the maximum uplink duty cycle.

6. The method according to claim 5, wherein the determining the second transmit power upper limit based on the first transmit power upper limit and the power adjustment value comprises:
in response to that the actual uplink duty cycle is less than the maximum uplink duty cycle, determining a difference between the first transmit power upper limit and the power adjustment value as the second transmit power upper limit.

7. The method according to claim 1, wherein before acquiring the actual uplink duty cycle, the method further comprises:
reporting terminal capability information to a base station, wherein the terminal capability information is used for indicating that the terminal has an ability to adjust the upper limit of the transmit power of the terminal according to the actual uplink duty cycle and the maximum uplink duty cycle.

8. The method according to claim 1, wherein under an uplink duty cycle scheduled by a base station for the terminal subsequently, the terminal satisfies a requirement of specific absorption rate (SAR) when sending uplink data according to the second transmit power upper limit.

9. The method according to claim 1, wherein before acquiring the actual uplink duty cycle, the method further comprises:

receiving uplink and downlink time configuration information issued by a base station, wherein the uplink and downlink time configuration information is used for indicating a time configuration of uplink transmission and downlink reception of the terminal;
wherein the uplink and downlink time configuration information is generated by the base station according to a scheduled uplink duty cycle, and the scheduled uplink duty cycle is acquired by the base station according to an acquired service requirement of an uplink and downlink service corresponding to the terminal.

10. The method according to claim 9, wherein the service requirement comprises at least one of a power requirement and a delay requirement.

11. A method for adjusting a transmit power, wherein the method is performed by a base station, and the method comprises:

acquiring an actual uplink duty cycle of a terminal; and
adjusting an upper limit of a transmit power of the terminal from a first transmit power upper limit to a second transmit power upper limit, wherein the second transmit power upper limit is determined based on the first transmit power upper limit, the actual uplink duty cycle, and a maximum uplink duty cycle corresponding to the first transmit power upper limit.

12. The method according to claim 11, wherein before acquiring the actual uplink duty cycle of the terminal, the method further comprises:

acquiring a service requirement of an uplink and downlink service corresponding to the terminal;
determining a scheduled uplink duty cycle according to the service requirement;
generating uplink and downlink time configuration information according to the scheduled uplink duty cycle, wherein the uplink and downlink time configuration information is used for indicating a time configuration of uplink transmission and downlink reception of the terminal; and
delivering the uplink and downlink time configuration information to the terminal.

13. The method according to claim 12, wherein the service requirement comprises at least one of a power requirement and a delay requirement.

14. The method according to claim 12, wherein the acquiring the service requirement of the uplink and downlink service corresponding to the terminal comprises:
in response to that the terminal has reported terminal capability information, performing a step of acquiring the service requirement of the uplink and downlink service corresponding to the terminal; wherein the terminal capability information is used for indicating that the terminal has an ability to adjust the upper limit of the transmit power of the terminal according to the actual uplink duty cycle.

15. An apparatus for adjusting a transmit power, applied in a terminal, the apparatus comprising:

an actual duty cycle acquisition module, configured to acquire an actual uplink duty cycle; and
a power adjustment module, configured to adjust an upper limit of a transmit power of the terminal from a first transmit power upper limit to a second transmit power upper limit, wherein the second transmit power upper limit is determined based on the first transmit power upper limit, the actual uplink duty cycle, and a maximum uplink duty cycle corresponding to the first transmit power upper limit.

16. The apparatus according to claim 15, wherein the apparatus further comprises:

a maximum duty cycle acquisition module, configured to acquire the maximum uplink duty cycle; and
the power adjustment module comprises:

an adjustment value determination unit, configured to determine a power adjustment value according to the actual uplink duty cycle and the maximum uplink duty cycle; and
a power upper limit determination unit, configured to determine the second transmit power upper limit based on the first transmit power upper limit and the power adjustment value.

17. The apparatus according to claim 16, wherein:
the adjustment value determination unit is configured to, in response to that the actual uplink duty cycle is less than the maximum uplink duty cycle, perform a logarithmic function processing on a first ratio to obtain the power adjustment value; wherein the first ratio is a ratio between the maximum uplink duty cycle and the actual uplink duty cycle.

18. The apparatus according to claim 17, wherein:
the power upper limit determination unit is configured to, in response to that the actual uplink duty cycle is less than the maximum uplink duty cycle, determine a sum of the first transmit power upper limit and the power adjustment value as the second transmit power upper limit.

19. The apparatus according to claim 16, wherein:
the adjustment value determination unit is configured to, in response to that the actual uplink duty cycle is greater than the maximum uplink duty cycle, perform a logarithmic function processing on a second ratio to obtain the power adjustment value; wherein the second ratio is a ratio between the actual uplink duty cycle and the maximum uplink duty cycle.

20. The apparatus according to claim 19, wherein:
the power upper limit determination unit is configured to, in response to that the actual uplink duty cycle is less than the maximum uplink duty cycle, determine a difference between the first transmit power upper limit and the power adjustment value as the second transmit power upper limit.

21. The apparatus according to claim 15, wherein the apparatus further comprises:
a capability information reporting module, configured to report terminal capability information to a base station before the actual duty cycle acquisition module acquires the actual uplink duty cycle, wherein the terminal capability information is used for indicating that the terminal has an ability to adjust the upper limit of the transmit power of the terminal according to the actual uplink duty cycle and the maximum uplink duty cycle.

22. The apparatus according to claim 15, wherein under an uplink duty cycle scheduled by a base station for the terminal subsequently, the terminal satisfies a requirement of specific absorption rate (SAR) when sending uplink data according to the second transmit power upper limit.

23. The apparatus according to claim 15, wherein the apparatus further comprises:

a configuration information receiving module, configured to receive uplink and downlink time configuration information issued by a base station before the actual duty cycle acquisition module acquires the actual uplink duty cycle, wherein the uplink and downlink time configuration information is used for indicating a time configuration of uplink transmission and downlink reception of the terminal;

wherein the uplink and downlink time configuration information is generated by the base station according to a scheduled uplink duty cycle, and the scheduled uplink duty cycle is acquired by the base station according to an acquired service requirement of an uplink and downlink service corresponding to the terminal.

24. The apparatus according to claim 23, wherein the service requirement comprises at least one of a power requirement and a delay requirement.

25. An apparatus for adjusting a transmit power, applied to a base station, the apparatus comprising:

an actual duty cycle acquisition module, configured to acquire an actual uplink duty cycle of a terminal; and
a power adjustment module, configured to adjust an upper limit of a transmit power of the terminal from a first transmit power upper limit to a second transmit power upper limit, wherein the second transmit power upper limit is determined based on the first transmit power upper limit, the actual uplink duty cycle, and a maximum uplink duty cycle corresponding to the first transmit power upper limit.

26. The apparatus according to claim 25, wherein the apparatus further comprises:

a service requirement acquisition module, configured to acquire a service requirement of an uplink and downlink service corresponding to the terminal before the actual duty cycle acquisition module acquires the actual uplink duty cycle of the terminal;
an actual duty cycle determination module, configured to determine a scheduled uplink duty cycle according to the service requirement;
a scheduling information generation module, configured to generate uplink and downlink time configuration information according to the scheduled uplink duty cycle, wherein the uplink and downlink time configuration information is used for indicating a time configuration of uplink transmission and downlink reception of the terminal; and
a configuration information delivery module, configured to deliver the uplink and downlink time configuration information to the terminal.

27. The apparatus according to claim 26, wherein the service requirement comprises at least one of a power requirement and a delay requirement.

28. The apparatus according to claim 26, wherein:
the service requirement acquisition module is configured to, in response to that the terminal has reported terminal capability information, perform a step of acquiring the service requirement of the uplink and downlink service corresponding to the terminal; wherein the terminal capability information is used for indicating that the terminal has an ability to adjust the upper limit of the transmit power of the terminal according to the actual uplink duty cycle.

29. A terminal, comprising a processor, a memory and a transceiver;

wherein the processor is configured to acquire an actual uplink duty cycle; and
the processor is further configured to adjust an upper limit of a transmit power of the terminal from a first transmit power upper limit to a second transmit power upper limit, wherein the second transmit power upper limit is determined based on the first transmit power upper limit, the actual uplink duty cycle, and a maximum uplink duty cycle corresponding to the first transmit power upper limit.

30. A base station, comprising a processor, a memory and a transceiver;

wherein the processor is configured to acquire an actual uplink duty cycle of a terminal; and
the processor is further configured to adjust an upper limit of a transmit power of the terminal from a first transmit power upper limit to a second transmit power upper limit, wherein the second transmit power upper limit is determined based on the first transmit power upper limit, the actual uplink duty cycle, and the uplink duty cycle corresponding to the first transmit power upper limit.

31. A computer-readable storage medium, wherein a computer program is stored in the storage medium, and the computer program is configured to be executed by a processor to implement the method for adjusting a transmit power according to any one of claims 1 to 10.

32. A computer-readable storage medium, wherein a computer program is stored in the storage medium, and the computer program is configured to be executed by a processor to implement the method for adjusting a transmit power according to any one of claims 11 to 14.

FIG. 1

FIG. 2

| Acquire an actual uplink duty cycle | 301 |

↓

| Adjust a transmission power upper limit of a terminal from a first transmission power upper limit to a second transmission power upper limit, wherein the second transmission power upper limit is determined on the basis of the first transmission power upper limit, the actual uplink duy cycle and the maximum uplink duty cycle corresponding to the first transmission power upper limit | 302 |

FIG. 3

| Acquire an actual uplink duty cycle of the terminal | 401 |

↓

| Adjust an upper limit of the transmit power of the terminal from a first transmit power upper limit to a second transmit power upper limit, where the second transmit power upper limit is determined based on the first transmit power upper limit, the actual uplink duty cycle and the maximum uplink duty cycle corresponding to the first transmit power upper limit | 402 |

FIG. 4

Terminal | Base station

S501, The terminal reports terminal capability information to the base station

S502, Acquire actual uplink duty cycle according to a service requirement

S503, Generate uplink and downlink time configuration information according to the scheduled uplink duty cycle

S504, Deliver the uplink and downlink time configuration information

S505, Perform uplink and downlink data transmission according to the uplink and downlink time configuration information

S506, Acquire the actual uplink duty cycle

S511, Adjust the upper limit of the transmit power of the terminal from the first transmit power upper limit to the second transmit power upper limit

S507, Acquire a maximum uplink duty cycle corresponding to the first transmit power upper limit

S508, Determine a power adjustment value according to the actual uplink duty cycle and the maximum uplink duty cycle

S509, Determine the second transmit power upper limit based on the first transmit power upper limit and the power adjustment value

S510, Adjust the upper limit of the transmit power from the first transmit power upper limit to the second transmit power upper limit

S512, Perform subsequent uplink data sending according to the second transmit power upper limit

FIG. 5

610
Actual duty cycle acquisition module

620
Power adjustment module

FIG. 6

```
┌─────────────────────────┐ 710
│   Actual duty cycle     │
│  acquisition module     │
└─────────────────────────┘
┌─────────────────────────┐ 720
│   power adjustment      │
│       module            │
└─────────────────────────┘
```

FIG. 7

Terminal 80

Processor 81   Transmitter 83

Bus 85

Receiver 82   Memory 84

FIG. 8

Base station 90

Processor 91   Transmitter 93

Bus 95

Receiver 92   Memory 94

FIG. 9

## INTERNATIONAL SEARCH REPORT

| International application No. |
| --- |
| **PCT/CN2020/070736** |

| A. | CLASSIFICATION OF SUBJECT MATTER |
| --- | --- |

H04W 52/08(2009.01)i;  H04W 52/36(2009.01)i

According to International Patent Classification (IPC) or to both national classification and IPC

| B. | FIELDS SEARCHED |
| --- | --- |

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 上行, 占比, 时间, 最大上行时间占比, 资源, 功率, 最大, 调整, 电磁波吸收比值, max, uplink, time, ratio, resource, power, SAR, duty, cycle, maxULdutycycle, adjustment

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108702709 A (BEIJING XIAOMI MOBILE SOFTWARE CO., LTD.) 23 October 2018 (2018-10-23) description, paragraphs [0005]-[0139] and [0177]-[0313] | 1-32 |
| A | CN 110225575 A (HUAWEI TECHNOLOGIES CO., LTD.) 10 September 2019 (2019-09-10) entire document | 1-32 |
| A | CN 104584648 A (SONY MOBILE COMMUNICATIONS AB) 29 April 2015 (2015-04-29) entire document | 1-32 |
| A | US 2019104476 A1 (LG ELECTRONICS INC.) 04 April 2019 (2019-04-04) entire document | 1-32 |
| A | WO 2019218806 A1 (OPPO GUANGDONG MOBILE COMMUNICATIONS CO., LTD.) 21 November 2019 (2019-11-21) entire document | 1-32 |
| A | WO 2015062024 A1 (HUAWEI TECHNOLOGIES CO., LTD.) 07 May 2015 (2015-05-07) entire document | 1-32 |
| A | WO 2019218112 A1 (OPPO GUANGDONG MOBILE COMMUNICATIONS CO., LTD.) 21 November 2019 (2019-11-21) entire document | 1-32 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 September 2020** | **13 October 2020** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2020/070736** |

**C.      DOCUMENTS CONSIDERED TO BE RELEVANT**

| Category* | Citation of document, with indication, where appropriate, of the relevant passages | Relevant to claim No. |
|---|---|---|
| A | QUALCOMM INC. "3GPP TSG-RAN WG4 #88bis R4-1812409" *MPR for High Power/High Duty Cycle Transmission,* 12 October 2018 (2018-10-12), entire document | 1-32 |

Form PCT/ISA/210 (second sheet) (January 2015)

**INTERNATIONAL SEARCH REPORT**
Information on patent family members

International application No.

**PCT/CN2020/070736**

| Patent document cited in search report | | | Publication date (day/month/year) | Patent family member(s) | | | Publication date (day/month/year) |
|---|---|---|---|---|---|---|---|
| CN | 108702709 | A | 23 October 2018 | WO | 2019227444 | A1 | 05 December 2019 |
| CN | 110225575 | A | 10 September 2019 | | None | | |
| CN | 104584648 | A | 29 April 2015 | WO | 2014020418 | A2 | 06 February 2014 |
| | | | | JP | 2015529055 | A | 01 October 2015 |
| | | | | US | 2014038588 | A1 | 06 February 2014 |
| | | | | US | 2016174159 | A1 | 16 June 2016 |
| | | | | KR | 20150027292 | A | 11 March 2015 |
| | | | | KR | 20160079909 | A | 06 July 2016 |
| | | | | EP | 2880922 | A2 | 10 June 2015 |
| US | 2019104476 | A1 | 04 April 2019 | | None | | |
| WO | 2019218806 | A1 | 21 November 2019 | CN | 110493871 | A | 22 November 2019 |
| WO | 2015062024 | A1 | 07 May 2015 | CN | 105052218 | A | 11 November 2015 |
| WO | 2019218112 | A1 | 21 November 2019 | CN | 111543092 | A | 14 August 2020 |

Form PCT/ISA/210 (patent family annex) (January 2015)